Europäisches Patentamt

European Patent Office

Office européen des brevets

(19)

(11) Veröffentlichungsnummer: **0 008 339**
**A1**

(12) # EUROPÄISCHE PATENTANMELDUNG

(21) Anmeldenummer: **79102219.7**

(22) Anmeldetag: **02.07.79**

(51) Int. Cl.³: **A 22 B 5/16**

(30) Priorität: **07.07.78 DE 2829882**

(43) Veröffentlichungstag der Anmeldung:
**05.03.80 Patentblatt 80/5**

(84) Benannte Vertragsstaaten:
**AT BE CH FR GB IT LU NL SE**

(71) Anmelder: **Vogt-Werke GmbH u. Co. KG**

**D-6490 Schlüchtern(DE)**

(72) Erfinder: **Fahrein, Horst**
**Hainwiesenweg 28**
**D-6490 Schlüchtern(DE)**

(74) Vertreter: **Strasse, Joachim, Dipl.-Ing. et al,**
**Zweibrückenstrasse 15**
**D-8000 München 2(DE)**

(54) **Enthäuter mit Fellabzugstrommel.**

(57) Bei Enthäutern mit Fellabzugstrommel (10) wird ein Hautzipfel des zu enthäutenden Tieres in eine von einer Kette (20) oder einem Seil gebildeten Schlaufe (24) eingebracht, die bzw. das an der Trommel befestigt wird und auf diese beim Enthäuten aufgewickelt wird. Dabei weist die Kette (20) oder das Seil eine Öse (22) auf, durch die die Kette (20) oder das Seil zur Bildung der Schlaufe (24) Führbar ist. Um das abgezogene Fell (26) von der Kette (20) zu befreien, muß die Schlaufe (24) von Hand vergrößert werden. Dies ist gewöhnlich nur bei entlasteter Kette (20) oder Seil möglich.

Ein einfaches und automatisches Entfesseln kann nur dadurch erfolgen, daß ein Seil (30) zwischen Trommelinnenseitenwand (14) und der Öse (22) derart verläuft, daß beim Aufwickeln der Abgezogenen Haut (6) das Seil (30) entspannt und beim Entfesseln gegenüber der Kette (20) scheinbar verkürzt wird. Somit muß beim Entfesseln die Öse (22) derart entlang der Kette (20) gleiten, daß die Schlaufe (24) vergrößert wird und das Fell (26) selbständig aus dieser Schlaufe (24) rutscht.

Fig. 1

Croydon Printing Company Ltd.

- 1 -

## Enthäuter mit Fellabzugstrommel

Die Erfindung bezieht sich auf einen Enthäuter mit Fellabzugstrommel zur Aufnahme von abgezogener Haut mit jeweils einer an den Trommelinnenseitenwänden befestigten Kette, die eine Öse aufweist, durch die die Kette zur Bildung einer zur Aufnahme eines Hautzipfels bestimmten Schlaufe führbar ist.

Bei den heutzutage verwendeten Schlachtstraßen durchlaufen die Schlachttiere nacheinander mehrere Arbeitsstationen, um für den Verbrauch geeignet hergerichtet zu werden. In einer dieser Arbeitsstationen findet die Enthäutung des geschlachteten Tieres statt. Dazu sind seitlich zum Schlachtvieh zwei Podeste vorgesehen, die als Arbeitsplatz für die Metzger dienen. Zwischen den Hubpodesten befindet sich eine Fellabzugstrommel, auf die die abgezogene Haut aufgewickelt wird. Zum Aufwickeln sind jeweils an der Trommel Ketten oder Seile angeordnet, die zu einer Schlaufe ausgebildet werden. In diese werden dann jeweils Hautzipfel eingebracht. Durch Spannen der Ketten werden die Hautzipfel von den jeweiligen Schlaufen so festgehalten, daß beim Aufwickeln der Ketten das Fell von dem Schlachtvieh abgezogen werden kann. Mit den erwähnten, eine Fellabzugstrommel aufweisenden Enthäuteranordnungen kann ein Abziehen des Felles über den gesamten Körper, in gewissen Fällen auch über den Kopf erfolgen. Um das Fell von der Abzugstrommel zu entfernen, muß diese

- 2 -

in entgegengesetzter Richtung zum Enthäutungsvorgang gedreht werden. Nachdem das gesamte Fell von der Trommel abgewickelt ist, müssen die Hautzipfel aus den Schlaufen entfernt werden. Dies ist eine zeitaufwendige zusätzliche manuelle Tätigkeit, da oft beim Enthäuten die Schlaufe mit dem zu fassenden Hautzipfel eng zusammengezogen wurde. Um eine Erleichterung des Entfesselns zu ermöglichen, ist es vorteilhaft, die Kette nicht mehr durch das Gewicht der Haut zu belasten. Dadurch besteht z. B. nicht die Möglichkeit, daß das Fell durch Anheben der Fellabzugstrommel auf eine Rutsche gehoben wird, um über diese zu einem Transportbehälter zu gelangen. Ein Anheben der Fellabzugstrommel würde stets eine Belastung der Kette durch das Eigengewicht der abgezogenen Haut nach sich ziehen.

Es ist Aufgabe der vorliegenden Erfindung, den Enthäuter mit Fellabzugstrommel der eingangs erwähnten Art derart weiterzubilden, daß ein einfaches, mit geringem Arbeits- und Kraftaufwand verbundenes Entfesseln unabhängig vom Ort der Fellabzugstrommel ermöglicht wird. Das bedeutet, daß ein Entfesseln auch dann sichergestellt sein soll, wenn das gesamte oder nahezu das gesamte Gewicht des Fells die Kette belastet. In einem solchen Fall kann die abgezogene Haut ohne Schwierigkeit auf eine Rutsche abgeladen werden, indem die Fellabzugstrommel auf die entsprechende Höhe der Rutsche angehoben wird. Die Aufgabe wird erfindungsgemäß dadurch gelöst, daß jeweils ein Seil zwischen Trommelinnenseitenwand und der entsprechenden Öse verläuft, wobei beim Aufwickeln der abgezogenen Haut das Seil entspannt und beim Entfesseln gegenüber der Kette scheinbar verkürzt ist. Durch die Anordnung des zusätzlichen Seils (oder Kette), das zwischen der Trommelinnenwandung und der Öse verläuft, die an der an derselben Trommelinnenseitenwandung befestigten Kette angeordnet ist, erfolgt ein automatisches Entfesseln, sofern das Seil

- 3 -

zu der Kette das richtige Längenverhältnis aufweist. Beim Aufwickeln soll nämlich das Seil gegenüber der gespannten Kette locker und beim Entfesseln gegenüber der Kette scheinbar verkürzt sein. Das bedeutet, daß beim Aufwickeln die durch Kette und Öse gebildete Schlaufe durch das Gewicht des Fells festgezogen wird, ohne daß das Seil eine Behinderung darstellt. Beim Entfesseln dagegen wird die Schlaufe vergrößert, indem das Seil gegenüber der Kette stärker gespannt wird. Dadurch erfolgt ein Bewegen der Öse entlang der Kette, wodurch wiederum eine Vergrößerung der Schlaufe erfolgt. Letzteres bewirkt, daß der Hautzipfel aus der Schlaufe gleiten kann. Vorzugsweise sind die Befestigungspunkte für Kette und Seil jeweils diametral an den Trommelinnenseitenwänden angeordnet, um die Bedingungen zwischen Kette und Seil sicherzustellen. Vorzugsweise ist der Befestigungspunkt der Kette an der Trommelinnenwand näher zur Trommel hin als der Befestigungspunkt des Seils angeordnet. Auch sollte, um ein einwandfreies Entlanggleiten der Öse an der Kette beim Entfesseln sicherzustellen, die Kette und das Seil an demselben oder nahezu an demselben Punkt der Öse befestigt sein.

Weitere Einzelheiten, Vorteile und Merkmale der Erfindung ergeben sich aus der nachfolgenden Beschreibung der Zeichnung.

Es zeigen:

Fig. 1  eine Fellabzugstrommel eines Enthäuters, bei der ein Fellzipfel in eine Schlaufe eingebracht ist,

Fig. 2  einen Ausschnitt der Fellabzugstrommel nach Fig. 1, nachdem der Aufwickelvorgang begonnen hat und

Fig. 3          einen weiteren Ausschnitt der Fellabzugstrommel nach Fig. 1, jedoch im Augenblick des Entfesselns.

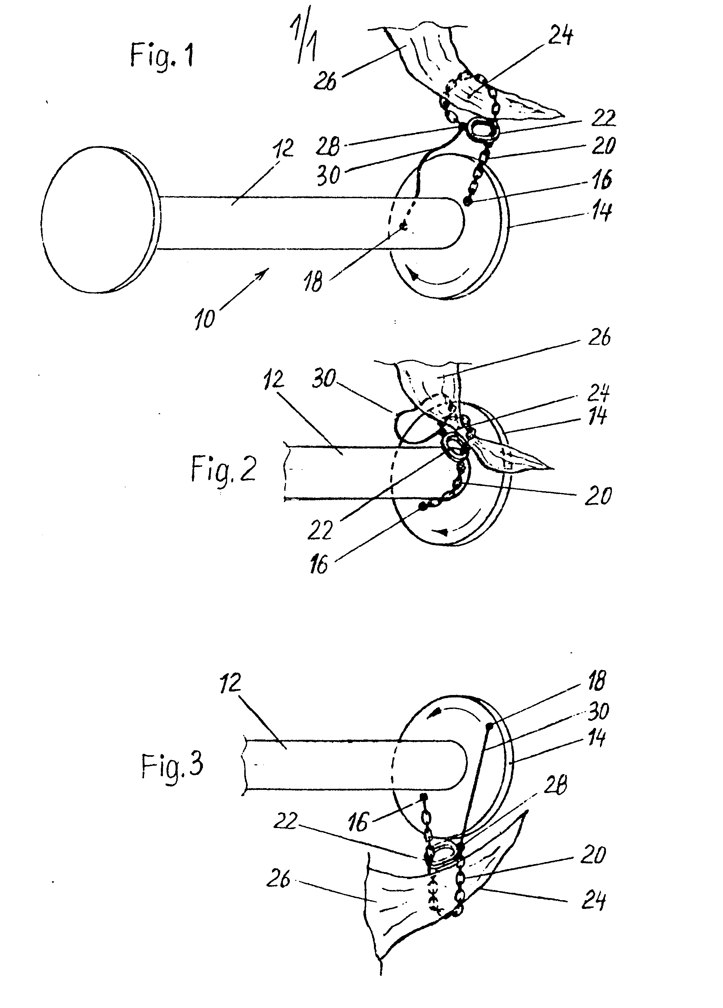

Die in den Figuren 1 bis 3 schematisch und teilweise im Ausschnitt dargestellten Fellabzugstrommeln 10 weisen jeweils eine
Trommel 12 auf, die von Trommelseitenwänden 14 begrenzt werden.
Auf die Trommel 12 soll zwischen den Trommelseitenwänden 14
ein von einem Schlachttier abzuhäutendes Fell 26 aufgewickelt
werden. Von dem Fell 26 ist ein Zipfel dargestellt, der in Fig.
1 in eine Schlaufe 24 eingebracht wird. Die Schlaufe 24
wird von einer Kette 20 und einer Öse 22 gebildet. Der Befestigungspunkt 16 für die Kette 20 befindet sich an der
Trommelinnenseitenwand. Selbstverständlich könnte der Befestigungspunkt auch auf der Trommel 12 liegen. Neben der
Kette 20 und der Öse 22 ist ein Seil 30 vorhanden, das an
einem Ende an der Trommelinnenseite am Ort 18 befestigt ist,
der vorzugsweise diametral zum Befestigungsort 16 der Kette
20 liegt. Mit seinem anderen Ende ist das Seil 30 mit der
Öse 22 an einem Punkt 28 verbunden, der auch der Befestigungspunkt für die Kette 20 ist. Die durch Öse 22 und Kette 20
gebildete Schlaufe 24 ist so groß, daß der Fellzipfel 26
in diese eingebracht werden kann. Um das Fell von dem Schlachtvieh abziehen zu können, wird in den Ausführungsbeispielen
die Fellabzugstrommel 10 im Uhrzeigersinn gedreht. Dabei wird
die Schlaufe 24 zusammengezogen und schließt den Fellzipfel 26
derart ein, daß er aus der Schlaufe 24 nicht mehr gleiten kann.
Dieses ist in Fig. 2 schematisch dargestellt. Man sieht, daß
die Schlaufe 24 gerade die Größe aufweist, um das Fell 26 einzuspannen. Das Seil 30 ist während des Enthäutens entspannt,
wie ebenfalls der Fig. 2 zu entnehmen ist.

Soll nun die abgezogene Haut von der Fellabzugstrommel 10
entfernt werden, so wird die Trommel 10 entgegengesetzt dem
Uhrzeigersinn gedreht. Nachdem das Fell von der Trommel 12
entfernt ist, hängt es nur noch in der von Öse 22 und Kette
20 gebildeten Schlaufe 24. Bei einem weiteren Drehen der
Fellabzugstrommel 10 wird das Seil 30 gespannt und bewirkt

ein Entlanggleiten der Öse 22 entlang der Kette 20. Dadurch wird die Schlaufe 24 vergrößert, so daß der Fellzipfel 26 aus dieser gleiten kann. Eine automatische Entfesselung wird somit bewirkt.

Die angegebenen Drehrichtungen zum Aufwickeln bzw. Abwickeln können selbstverständlich auch umgekehrt verlaufen.

Vorteil der erfindungsgemäßen Anordnung ist es, daß unabhängig vom Ort der Fellabzugstrommel 10 ein Entfesseln erfolgen kann. Die neben der Fellabzugstrommel 10 auf nicht dargestellten Hubpodesten arbeitenden Metzger brauchen somit nicht mehr selbst bzw. mittels Hebevorrichtungen eine Entlastung der Kette herbeizuführen, um ein Vergrößern der Schlaufe 24 und somit ein Lösen des Fells aus dieser zu bewerkstelligen. Durch die erfindungsgemäße Anordnung ist es erstmals möglich, daß auf einfache Weise die abgezogene Haut unabhängig von der Höhenstellung der Fellabzugstrommel automatisch entfesselt und abgeworfen wird, z. B. direkt in einen Schacht unter der Maschine oder in eine höher gelegene seitliche Abrutschrinne. Gleichzeitig ist als Zusatzvorteil festzustellen, daß die beiden Hilfskräfte zu weiteren Vorbereitungsarbeiten am Tier freigestellt werden, wodurch die Wirtschaftlichkeit der Verarbeitung des Schlachtviehs verbessert wird.

Patentansprüche:

1. Enthäuter mit Fellabzugstrommel zur Aufnahme von abgezogener Haut mit jeweils einer an den Trommelinnenseitenwänden befestigten Kette, die eine Öse aufweist, durch die die Kette zur Bildung einer zur Aufnahme eines Hautzipels bestimmten Schlaufe führbar ist, dadurch gekennzeichnet, daß jeweils ein Seil zwischen Trommelinnenseitenwand (14) und der entsprechenden Öse (22) verläuft, wobei beim Aufwickeln der abzuziehenden Haut (26) das Seil (3o) entspannt und beim Entfesseln gegen-über der Kette (2o) scheinbar verkürzt ist.

2. Enthäuter nach Anspruch 1, dadurch gekennzeichnet, daß Befestigungspunkte (16,18) für Kette (2o) und Seil (3o) jeweils diametral an den Trommelinnenseitenwänden (14) angeordnet sind.

3. Enthäuter nach Anspruch 1 und/oder 2, dadurch gekennzeichnet, daß der Befestigungspunkt (16) der Kette (2o) an der Trommelinnenseitenwand (14) näher zur Trommel (12) hin als der Befestigungspunkt (18) des Seils (3o) liegt.

4. Enthäuter nach Anspruch 1 und/oder zumindest einem der nachfolgenden Ansprüche, dadurch gekennzeichnet, daß die Kette (2o) und das Seil (3o) an demselben oder nahezu demselben Punkt (28) an der Öse (22) be-festigt sind.

0008339

Fig. 1

1/1

Fig. 2

Fig. 3

Europäisches
Patentamt

**EUROPÄISCHER RECHERCHENBERICHT**

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | US - A - 4 035 868 (GARDNER)<br>* Spalte 2, Zeile 65 bis Spalte 3, Zeile 19; Figur 3 * | 1 | A 22 B 5/16 |
| | US - A - 3 990 404 (McNICOLL)<br>* Spalte 2, Zeilen 30 bis 68; Figuren 1-2 * | 1 | |

RECHERCHIERTE SACHGEBIETE (Int. Cl. ³)

A 22 B
A 01 K

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 09-10-1979 | CRUCHTEN |

EPA form 1503.1 06.78